# EUROPÄISCHE PATENTSCHRIFT

(11) **EP 1 954 930 B1**
(45) Veröffentlichungstag und Bekanntmachung des Hinweises auf die Patenterteilung: **13.01.2010**
(21) Anmeldenummer: 06830058.1
(22) Anmeldetag: 21.11.2006
(51) Int. Cl.: F02C 3/34, E04H 7/30

(54) **EINHAUSUNG FÜR DIE SILOBRENNKAMMER EINER GASTURBINE**
HOUSING FOR THE CYLINDRICAL COMBUSTION CHAMBER OF A GAS TURBINE
ENCEINTE POUR CHAMBRE DE COMBUSTION DE TYPE SILO D'UNE TURBINE A GAZ

(30) Priorität: 24.11.2005 CH 18772005
(43) Veröffentlichungstag der Anmeldung: 13.08.2008
(73) Patentinhaber: Alstom Technology Ltd, 5400 Baden (CH)
(72) Erfinder: WIEGERS, Jan, 5442 Fislisbach (CH); VONAU, Karl-Heinz, 79761 Waldshut-Tiengen (DE)
(86) Internationale Anmeldenummer: PCT/EP2006/068710
(87) Internationale Veröffentlichungsnummer: WO 2007/060158

(56) Entgegenhaltungen:
- EP-A- 0 302 508
- DE-A1- 10 229 663
- US-A- 5 680 753
- US-A1- 2002 023 426
- PATENT ABSTRACTS OF JAPAN Bd. 1999, Nr. 14, 22. Dezember 1999 (1999-12-22) & JP 11 256864 A (FUJITA CORP), 21. September 1999 (1999-09-21)

## Beschreibung

### TECHNISCHES GEBIET

Die vorliegende Erfindung bezieht sich auf das Gebiet der Technik von Gasturbinen. Sie betrifft eine Einhausung für eine senkrecht auf einer Gasturbine stehende Silobrennkammer gemäss dem Oberbegriff des Anspruchs 1.

### STAND DER TECHNIK

Bei Gasturbinen, die anstelle der üblichen, konzentrisch zur Turbinenachse angeordneten Ringbrennkammern eine Silobrennkammer aufweisen, die senkrecht stehend oberhalb der liegenden Gasturbine aufragt (siehe z.B. die US-A-5,680,753), ist die Silobrennkammer und das damit verbundene Brennstoffverteilungssystem von einer weitgehend geschlossenen Einhausung umgeben, die auf einer Plattform oberhalb der Gasturbine aufgebaut ist.

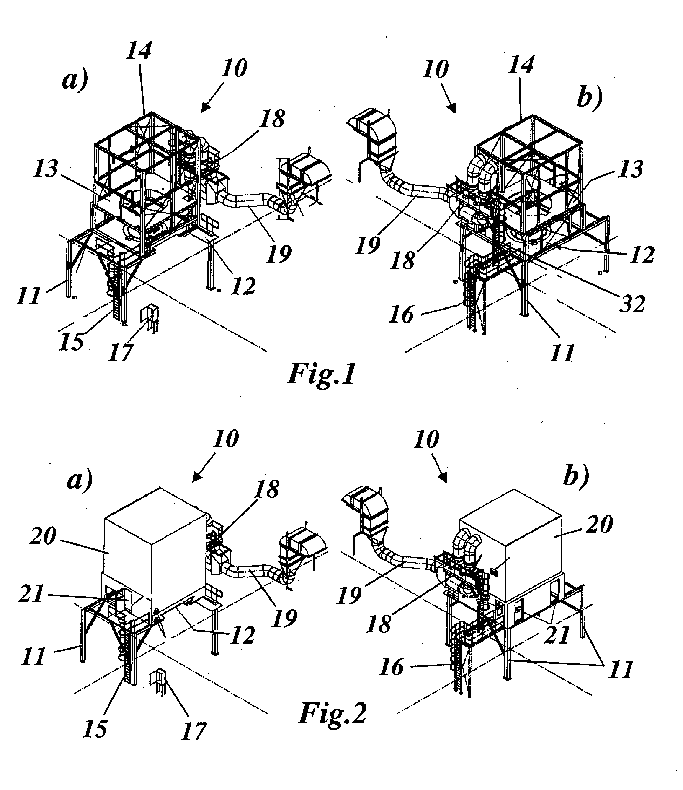

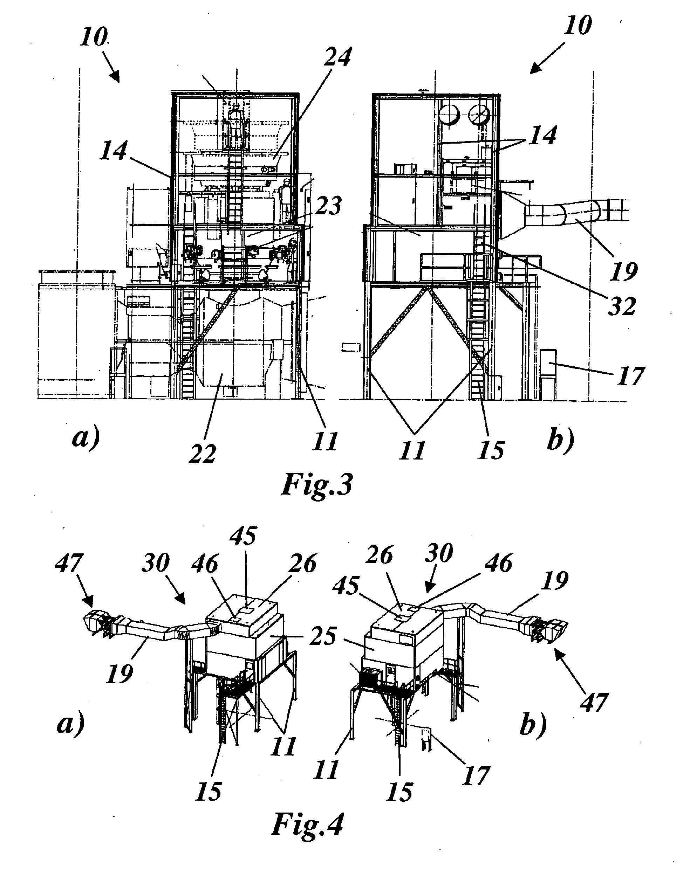

Eine von der Anmelderin eingesetzte, bekannte Einhausung ist in den Fig. 1-3 in verschiedenen perspektivischen und Seiten-Ansichten wiedergegeben. Die rechteckige Einhausung 10 umgibt die über der Gasturbine 22 stehende Silobrennkammer 23 (in Fig. 3a gestrichelt eingezeichnet). Die Einhausung 10 ist auf einer ersten Plattform 12 aufgebaut, die auf Ständern 11 oberhalb der Gasturbine 22 angeordnet ist. Die erste Plattform 12 ist auf gegenüberliegenden Seiten jeweils durch eine Leiter 15 bzw. 16 erreichbar. Tragende Struktur der Einhausung 10 ist ein gitterförmiger Grundstahlbaurahmen 14 (Fig. 1, 3), an dem eine Mehrzahl von einzelnen Paneelen 20 angehängt und montiert sind. Innerhalb des Grundstahlbaurahmens 14 ist oberhalb der ersten Plattform 12 eine zweite Plattform 13 eingezogen, die von der ersten Plattform aus durch eine weitere Leiter erreichbar ist. Am Grundstahlbaurahmen 14 sind weiterhin die für die Anlage notwendigen elektrischen Einrichtungen befestigt sowie eine Ventilation 18, die über einen Abluftkanal 19 Abluft aus der Einhausung 10 nach aussen drückt.

In der Einhausung 10 sind auf der Ebene der ersten Plattform 12 mehrere Türen 21 vorgesehen. Eine Steuerung 17 ist in einem Schaltkasten ausserhalb der Einhausung 10 untergebracht.

Die bekannte Einhausung 10 ist in ihrer Gesamtheit verschraubt, so dass sie nur mit erheblichem Aufwand montiert und demontiert werden kann. Damit ohne Demontage der Einhausung 10 bei einer Wartung der Silobrennkammer 23 der oben abschliessende Brennkammerdeckel 24 angehoben werden kann (siehe die beiden Stellungen des Brennkammerdeckels in Fig. 3a), ist die Einhausung 10 vergleichsweise hochbauend.

Die bekannten Brennkammer-Einhausungen für Gasturbinen mit Silobrennkammer können also wie folgt charakterisiert werden:
- Stahlbau mit angehängten Paneelen
- Paneele sind einzeln am Stahlbau montiert
- Elektrisches Equipment am Stahlbau montiert
- Hohe Einhausung wegen Brennkammerdeckel-Wartungshub

Durch diese Art der Einhausung ist ein Manövrieren von Großkomponenten in der Gasturbinenhalle stark eingeschränkt. Zudem zwingt das Design der Einhausung den Betreiber der Gasturbine zu einer aufwendigen kompletten Demontage der Einhausung während der Inspektionen oder bei außerplanmässigem Öffnen der Gasturbine.

Um eine einfache und schnelle Montage und Demontage einer Silobrennkammer-Einhausung sowie die maximal mögliche Abmessung der Teile, welche mit dem Kran in der Gasturbinenhalle zu transportieren sind, zu ermöglichen, ist es notwendig, die Ausführung der Silobrennkammer-Einhausung von Grund auf neu zu definieren.

Die Druckschrift EP-A1-0 302 508 offenbart eine Energieversorgungsanlage mit einer generatorgekoppelten Gasturbine, die für den Einsatz in einem U-Boot vorgesehen ist und daher in einer schalldämmenden Schallkapsel untergebracht ist. Auch hier ist ein Grundgerüst vorgesehen, an dem paneelartige Platten befestigt sind.

Die Druckschrift US-A1-20021023426 offenbart eine Umhüllung für eine Gasturbine, die ein Paar Seitenwände, ein Paar Endwände und eine Decke umfasst. Weitergehende Einzelheiten über den Aufbau der Umhüllung bzw. der Wände werden nicht offenbart.

Die Druckschrift DE-A1-102 29 663 schliesslich betrifft eine sogenannte "Coldbox" für die Tieftemperaturzerlegung, die gasdicht ausgeführt werden muss und dazu nach einem vorgängigen Verschrauben einzelner Paneele verschweisst wird. Da die Paneele alle mit stabilen Rahmen ausgestattet sind, wird auf diese Weise wiederum eine feste Rahmenkonstruktion mit zugehörigen Abdeckelementen in Blechform erzeugt.

Bei der Neudefinition der Brennkammer-Einhausung sollte dabei möglichst auf folgende Punkte geachtet werden:
- Die Einhausung soll so klein wie möglich dimensioniert sein, um eine höchstmögliche Kranverfügbarkeit in der Gasturbinenhalle zu gewährleisten.
- Alle Einhausungsteile sind so leicht wie möglich zu konzipieren, um ein schnelles und einfaches Handling sicherstellen zu können.
- Die Einhausung sollte in möglichst grosse Einzelteile zerlegt werden können, um die Anzahl Kranfahrten während der Montage und Demontage so klein wie möglich zu halten
- Die Einhausung soll möglichst ohne Hilfswerkzeuge demontierbar sein.

### DARSTELLUNG DER ERFINDUNG

Es ist Aufgabe der Erfindung, eine Einhausung für die Silobrennkammer einer Gasturbine zu schaffen, welche die Nachteile der bekannten Einhausungen vermeidet und mit der sich die oben aufgeführten Anforderungen auf einfache Weise erfüllen lassen.

Die Aufgabe wird durch die Gesamtheit der Merkmale des Anspruchs 1 gelöst. Kennzeichnend für die Erfindung ist, dass die Wandund Deckenpaneele durch eine starre Verbindung untereinander eine freitragende Haube bilden. Durch die selbsttragenden Eigenschaften der Haube kann auf den üblichen Grundstahlbaurahmen weitgehend verzichtet werden, was sowohl die Montage als auch die Demontage der Einhausung vereinfacht und beschleunigt. Insbesondere ist es möglich, die Haube als Ganzes abzuheben, um Zugang zur Brennkammer zu erhalten.

Eine Ausgestaltung der Erfindung ist **dadurch gekennzeichnet, dass** die Wandund Deckenpaneele jeweils eine integrierte Stahlkonstruktion aufweisen, wobei die integrierte Stahlkonstruktion einen Rahmen für das jeweilige Paneel umfasst. Die integrierten Stahlkonstruktionen der einzelnen Paneele geben nicht nur den Paneelen selbst eine mechanische Stabilität, sondern bilden nach der Verbindung der einzelnen Paneele zur Haube insgesamt eine zusammengesetzte Stahlkonstruktion, die der ganzen Haube die notwendige Stabilität verleiht. Die Wand- und Deckenpaneele sind dabei vorzugsweise jeweils rechteckig ausgebildet.

Besonders einfach und flexibel sind Montage und Demontage, wenn gemäss einer anderen Ausgestaltung die starre Verbindung zwischen den Decken- und/oder Wandpaneelen lösbar ausgebildet ist, zur lösbaren Verbindung zwischen den Decken- und/oder Wandpaneelen Schnellspannverschlüsse vorgesehen sind, und wenn die Schnellspannverschlüsse an den Rahmen der Paneele angeordnet sind. Die Schnellspannverschlüsse umfassen vorzugsweise jeweils einen mittels eines schwenkbar gelagerten Spannhebel betätigbaren Spannhaken am Rahmen des einen Paneels und einen Bolzen am Rahmen des anderen Paneels, welchen Bolzen der Spannhaken beim Spannen der Verbindung hintergreift.

Die Verbindung der Paneele wird weiter verbessert und stabilisiert, wenn zur Verbindung zweier Paneele innerhalb des Rahmens des einen Paneels ein in Längsrichtung verlaufendes U-Profil angeordnet ist, welches ein am Rahmen des anderen Paneels angeordnetes, in Längsrichtung verlaufendes und in der Breite angepasstes Vierkantprofil aufnimmt.

Zusätzlich können zwischen rechtwinklig miteinander verbundenen Paneelen zur Abstützung sich über Eck erstreckende Verstrebungen angeordnet sein.

Auch können mit Vorteil an den Paneelen bzw. der Haube Mittel zum Anheben der Paneele bzw. der Haube, insbesondere in Form von Schraubösen, vorgesehen sein.

Eine weitere Ausgestaltung der Erfindung ist **dadurch gekennzeichnet, dass** die Einhausung auf einer ersten Plattform aufsitzt, welche auf Ständern oberhalb der Gasturbine angeordnet ist und eine erste Öffnung für die Silobrennkammer aufweist, und dass innerhalb der Haube auf der ersten Plattform eine als eigenständiges Gestell innerhalb der Einhausung ausgebildete zweite Plattform aufgestellt ist, welche eine zweite Öffnung für die Silobrennkammer aufweist. Die zweite Plattform ist dabei vorzugsweise zur schnelleren Montage und Demontage in zwei Teile aufgeteilt. Zusätzlich kann an der zweiten Plattform zur Erhöhung der Sicherheit bei der Montage und Demontage ein Schutzgeländer montiert sein. Die zweite Plattform dient vorzugsweise auch als Träger elektrischer Installationen.

Eine andere Ausgestaltung der Erfindung zeichnet sich dadurch aus, dass die Deckenpaneele der Haube ein Dach bilden, und dass in dem Dach wenigstens eine Öffnung vorgesehen ist, welche Zugang zum Inneren der Einhausung gewährt.

Für die Entlüftung der Einhausung kann eine Ventilationseinrichtung vorgesehen sein, die getrennt von der Einhausung angeordnet und mit der Einhausung über einen Abluftkanal verbunden ist. Der Abluftkanal ist dabei vorteilhafterweise zur schnelleren Montage und Demontage mit Schnellverschlüssen ausgestattet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in zwei unterschiedlichen perspektivischen Ansichten (Fig. 1a und 1b) den Grundstahlbaurahmen der Einhausung einer Silobrenn- kammer nach dem Stand der Technik;
- Fig. 2: in zwei unterschiedlichen perspektivischen Ansichten (Fig. 2a und 2b) die Einhausung der Silobrennkammer gemäss Fig. 1 mit am Grundstahlbaurahmen montierten Paneelen;
- Fig. 3: in zwei unterschiedlichen Seitenansichten (Fig. 3a und 3b) die Ein- hausung der Silobrennkammer gemäss Fig. 1, wobei in Fig. 3a die Gasturbine mit Silobrennkammer und der Wartungshub des Brennkammerdeckels angedeutet ist;
- Fig. 4: in zwei unterschiedlichen perspektivischen Ansichten, Fig. 4a) und Fig. 4b), die vollständige Einhausung der Silobrennkammer ge- mäss einem Ausführungsbeispiel der Erfindung;
- Fig. 5: in zwei unterschiedlichen perspektivischen Ansichten (Fig. 5a und 5b) die untere Plattform der Einhausung nach Fig. 4;
- Fig. 6: verschiedene perspektivische Ansichten der separat aufgebauten oberen Plattform der Einhausung nach Fig. 4, wobei in Fig. 6c die Teilbarkeit der oberen Plattform angedeutet ist;
- Fig. 7: in einem vergrösserten Ausschnitt eine Eckverbindung zweier Wandpaneele der Einhausung nach Fig. 4 mittels eines Schnell- spannverschlusses und einer optionalen Verstrebung;
- Fig. 8: in einem vergrösserten Ausschnitt eine Eckverbindung eines Deckenpaneels und eines Wandpaneels der Einhausung nach Fig. 4 mittels eines Schnellspannverschlusses;
- Fig. 9: in einer vereinfachten senkrechten Schnitt-Darstellung die aus den Decken- und Wandpaneelen mittels der Schnellspannverschlüsse gebildete Hülle der Einhausung nach Fig. 4; und
- Fig. 10: in einer vereinfachten horizontalen Schnitt-Darstellung die aus den Wandpaneelen mittels der Schnellspannverschlüsse gebildete Hülle der Einhausung nach Fig. 4.

### WEGE ZUR AUSFÜHRUNG DER ERFINDUNG

Die gemäss der Erfindung neu definierte Brennkammer-Einhausung kann mit folgenden Worten umschrieben werden:

### Panelauslegung

Statt dass die Paneele an einer schweren Stahlkonstruktion zur Bildung einer Wand angehängt werden, ist bei der Neukonstruktion die leichtere Stahlkonstruktion in den einzelnen Paneelen integriert. Somit bilden die einzelnen zusammengebauten Paneele stabile Seitenwände und das Dach. Die Wandteile und das Dach werden mit Schnellspannverschlüssen aufgebaut und untereinander verbunden.

### Interne Plattform

Um die Silobrennkammer optimal warten zu können, wird innerhalb der Brennkammer-Einhausung eine (zweite) Plattform aufgebaut. Diese Plattform ist bei der aus dem Stand der Technik bekannten Brennkammer-Einhausung kräftemässig mit dem Stahlbau verbunden. Da dieser Stahlbau nun wegfällt, wird die Plattform als eigenständiges Gestell innerhalb der Brennkammer-Einhausung aufgestellt. Damit eine schnelle Demontage und Montage gewährleistet ist, ist die Plattform zweigeteilt.

Die Plattform dient zudem als Träger sämtlicher elektrischer Installationen, die bislang direkt an der Brennkammer-Einhausung montiert wurden. Um die Arbeitssicherheit während der Demontage und Montage zu gewährleisten, ist an der Plattform ein Schutzgeländer montiert, sodass bei demontierten Seitenwände niemand herunterstürzen kann.

### Dach

Das Dach der Einhausung hat zwei Zugangsöffnungen. Eine kleinere Öffnung oberhalb der FDS-Leiter (FDS = Fuel Distribution System (Brennstoffverteilungssystem)) ermöglicht den Zutritt zu einer Anhängevorrichtung. Eine grössere Öffnung gewährt den Zutritt zum FDS, sodass während des Betriebes das FDS inspiziert werden kann, ohne dass man den Oberteil der Brennkammer-Einhausung demontieren muss.

### Ventilationssystem

Da die erfindungsgemässe Brennkammer-Einhausung keinen Grundstahlbaurahmen mehr hat, kann die Ventilation nicht mehr seitlich an der Brennkammer-Einhausung montiert werden. Um eine hohe Wartungsfreundlichkeit gewährleisten zu können, werden die Ventilatoren neu am Boden oder beim Austritt des Abluftkanals aufgestellt. Der Abluftkanal wird ebenfalls mit Schnellverschlüssen ausgestattet, so dass für dessen Demontage und Montage kein Werkzeug gebraucht werden muss und somit ein schnelles Arbeiten gewährleistet ist.

Ein Ausführungsbeispiel einer Einhausung nach der Erfindung ist in den Fig. 4 bis 10 wiedergegeben.

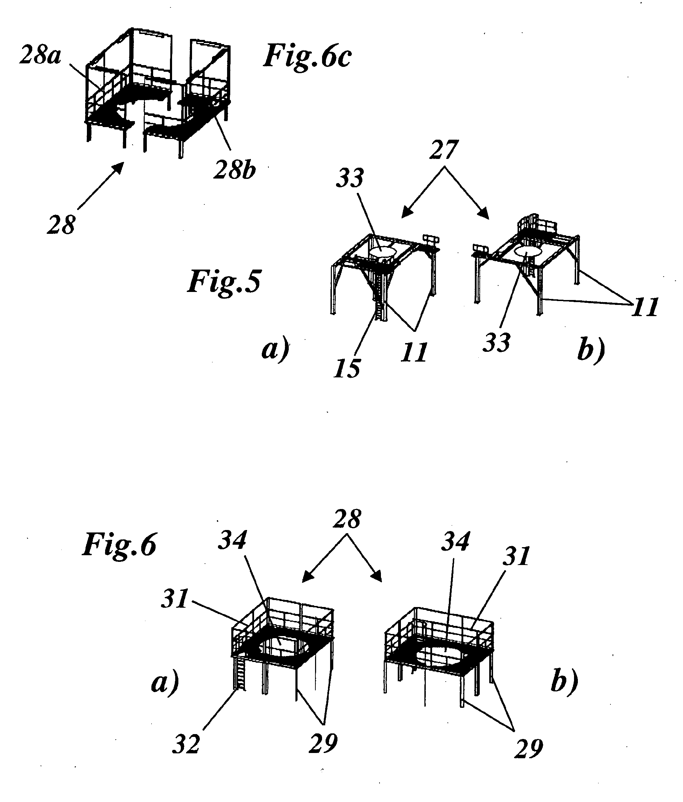

Die Einhausung 30 der Fig. 4 ist in an sich bekannter Weise auf einer unteren ersten Plattform 27 (Fig. 5) aufgebaut, die auf Ständern 11 steht und eine Öffnung 33 für die Silobrennkammer aufweist. Auf der ersten Plattform 27 ist eine eigenständige zweite Plattform 28 (Fig. 6) aufgestellt, die auf Ständern 29 steht und ebenfalls eine Öffnung 34 für die Silobrennkammer aufweist. Die zweite Plattform 28 ist von einem Schutzgeländer 31 umgeben. Wie in Fig. 6c zu erkennen ist, besteht die Plattform 28 aus zwei Teilen 28a und 28b. Zum Erreichen der ersten und zweiten Plattform 27 bzw. 28 ist eine Leiter 15 bzw. 32 vorgesehen.

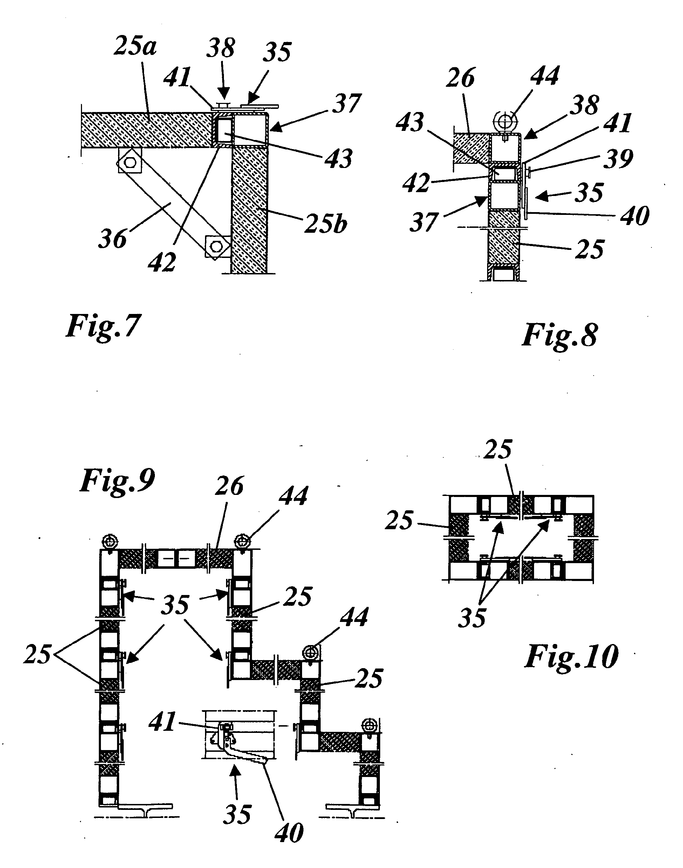

Aufbauend auf den beiden Plattformen 27 und 28 wird die Einhausung 30 durch eine Mehrzahl von eigenstabilen Wandpaneelen 25 und Deckenpaneelen 26 vervollständigt, die untereinander durch Schnellspannverschlüsse (35 in Fig. 7-10) lösbar verbunden sind und eine selbsttragende Haube bilden (Fig. 9). Wie in Fig. 7 und 8 besonders deutlich zu sehen ist, weisen die Wandpaneele 25 bzw. 25a,b und Deckenpaneele 26 jeweils eine rahmenartige integrierte Stahlkonstruktion 37, 38 auf, die aus einem quadratischen Vierkantprofil und/oder einem U-Profil 42 besteht. Am quadratischen Vierkantprofil ist ein weiteres Vierkantprofil 43 angeordnet, dass mit dem U-Profil 42 des benachbarten Paneels zusammenwirkt und in der Breite auf dieses abgestimmt ist. Die Schnellspannverschlüsse 35 haben jeweils einen Spannhaken 41, der mittels eines schwenkbaren Spannhebels 40 betätigt wird und hinter einen Bolzen 39 am benachbarten Paneel greift. Der Bolzen 39 ist auf der Aussenseite des U-Profils 42 eines Paneels befestigt, Spannhebel 40 und Spannhaken 41 sind am quadratischen Vierkantprofil des anderen Paneels befestigt, welches mit dem weiteren Vierkantprofil 43 in das U-Profil 42 eintaucht.

An den Paneelen 25 und 26 sind auf der Oberseite Schaubösen 44 eingeschraubt (Fig. 8, Fig. 9), mittels derer die Paneele bzw. die gesamte Haube mit dem Kran angehoben werden kann. Das Dach der Einhausung 30 hat gemäss Fig. 4 zwei Öffnungen 45 und 46, die den Zugang von oben zum Inneren der Einhausung 30 ermöglichen, wobei die grössere Öffnung 45 den Zutritt zum Brennstoffverteilungssystem FDS ermöglicht, während die kleiner Öffnung 46 den Zutritt zu einer Anhängevorrichtung gewährt.

Eine Ventilationseinrichtung 47 ist separat von der Einhausung 30 platziert und mit der Einhausung über einen Abluftkanal 19 verbunden, der mittels Schnellverschlüssen montiert und demontiert werden kann.

Insgesamt ergeben sich zwischen der herkömmlichen Lösung und der neuen Lösung die folgenden Unterschiede:

| Merkmal | herkömmliche Einhausung | neue Einhausung |
|---|---|---|
| | | |
| Tragstruktur | Stahlbau mit mehreren angehängen Paneelen | Selbsttragende Struktur mit bereits zu einer Einheit zusammengebauten Seitenteilen |
| Paneelmontage | Paneele mit Schrauben an Stahlbau montiert | Paneele zu kompletten Seitenwänden zusammengefasst |
| Stahlbaumontage | Stahlbau ist verschraubt | Kein Stahlbau vorhanden |
| Verbindungstechnik | Schraubverbindungen | Schnellverschluss-System |
| Montagezeit | ca. 10 Tage | ca. 3 Tage |
| Demontagezeit | ca. 10 Tage | ca. 3 Tage |
| Montage elektrische Ausrüstung | am Stahlbau Einhausung | direkt an der Brennkammer |
| Handling Montage/Demontage | aufwändig, da viele schwere Teile | einfach, da wenige leichte Teile |
| Aufstellung Ventilation | Ausserhalb der Einhausung, Last über Stahlbau | Ventilation am Boden oder bei Abluftaustritt |
| Installation elektrische Ausrüstung | direkt an der Einhausung montiert | Montage an der Plattform |
| Interne (obere) Plattform | aufwändig montierbar, da mit Einhausung verbunden und aus vielen Einzelteilen bestehend | leichte Montage, da zweiteilige Einheit |

### BEZUGSZEICHENLISTE

- 10: Einhausung (Stand d. Technik)
- 11: Ständer
- 12,13: Plattform
- 14: Grundstahlbaurahmen (gitterförmig)
- 15,16: Leiter
- 17: Steuerung
- 18: Ventilation
- 19: Abluftkanal
- 20: Paneel
- 21: Tür
- 22: Gasturbine
- 23: Silobrennkammer
- 24: Brennkammerdeckel
- 25,25a,b: Wandpaneel
- 26: Deckenpaneel
- 27,28: Plattform
- 28a,b: Teil (Plattform)
- 29: Ständer
- 30: Einhausung (neu)
- 31: Schutzgeländer
- 32: Leiter
- 33,34: Öffnung (Plattform)
- 35: Schnellspannverschluss
- 36: Verstrebung
- 37,38: Stahlkonstruktion (Paneel)
- 39: Bolzen
- 40: Spannhebel
- 41: Spannhaken
- 42: U-Profil
- 43: Vierkantprofil
- 44: Schrauböse
- 45,46: Öffnung (Dach)
- 47: Ventilationseinrichtung

## Patentansprüche

1. Einhausung (30) für eine senkrecht auf einer Gasturbine (22) stehende Silobrennkammer (23), welche Einhausung (30) eine Mehrzahl von Wand- und Deckenpaneelen (25, 26) umfasst, die eine Haube bilden und die Silobrennkammer (23) umschliessen, **dadurch gekennzeichnet, dass** die Wand- und Deckenpaneele (25, 26) durch eine starre Verbindung untereinander eine freitragende Haube bilden.

2. Einhausung nach Anspruch 1, **dadurch gekennzeichnet, dass** die Wandund Deckenpaneele (25, 26) jeweils eine integrierte Stahlkonstruktion (37, 38) aufweisen.

3. Einhausung nach Anspruch 2, **dadurch gekennzeichnet, dass** die integrierte Stahlkonstruktion (37, 38) einen Rahmen für das jeweilige Paneel (25, 26) umfasst.

4. Einhausung nach einem der Ansprüche 1 bis 3, **dadurch gekennzeichnet, dass** die Wand- und Deckenpaneele (25, 26) jeweils rechteckig ausgebildet sind.

5. Einhausung nach einem der Ansprüche 1 bis 4, **dadurch gekennzeichnet, dass** die starre Verbindung zwischen den Decken- und/oder Wandpaneelen (25, 26) lösbar ausgebildet ist.

6. Einhausung nach Anspruch 5, **dadurch gekennzeichnet, dass** zur lösbaren Verbindung zwischen den Decken- und/oder Wandpaneelen (25, 26) Schnellspannverschlüsse (35) vorgesehen sind.

7. Einhausung nach Anspruch 6, **dadurch gekennzeichnet, dass** die Wandund Deckenpaneele (25, 26) jeweils eine integrierte Stahlkonstruktion (37, 38) aufweisen, die einen Rahmen für das jeweilige Paneel (25, 26) umfasst, und dass die Schnellspannverschlüsse (35) an den Rahmen der Paneele (25, 26) angeordnet sind.

8. Einhausung nach Anspruch 6, **dadurch gekennzeichnet, dass** die Schnellspannverschlüsse (35) jeweils einen mittels eines schwenkbar gelagerten Spannhebels (40) betätigbaren Spannhaken (41) am Rahmen des einen Paneels und einen Bolzen (39) am Rahmen des anderen Paneels umfassen, welchen Bolzen (39) der Spannhaken (41) beim Spannen der Verbindung hintergreift.

9. Einhausung nach Anspruch 7 oder 8, **dadurch gekennzeichnet, dass** zur Verbindung zweier Paneele (25, 26) innerhalb des Rahmens des einen Paneels ein in Längsrichtung verlaufendes U-Profil (42) angeordnet ist, welches ein am Rahmen des anderen Paneels angeordnetes, in Längsrichtung verlaufendes und in der Breite angepasstes Vierkantprofil (43) aufnimmt.

10. Einhausung nach einem der Ansprüche 7 bis 9, **dadurch gekennzeichnet, dass** zwischen rechtwinklig miteinander verbundenen Paneelen (25a,b) zur Abstützung sich über Eck erstreckende Verstrebungen (36) angeordnet sind.

11. Einhausung nach Anspruch 1, **dadurch gekennzeichnet, dass** an den Paneelen (25, 26) bzw. der Haube Mittel zum Anheben der Paneele (25, 26) bzw. der Haube, insbesondere in Form von Schraubösen (44), vorgesehen sind.

12. Einhausung nach Anspruch 1, **dadurch gekennzeichnet, dass** die Einhausung (30) auf einer ersten Plattform (27) aufsitzt, welche auf Ständern (11) oberhalb der Gasturbine (22) angeordnet ist und eine erste Öffnung (33) für die Silobrennkammer (23) aufweist.

13. Einhausung nach Anspruch 12, **dadurch gekennzeichnet, dass** innerhalb der Haube auf der ersten Plattform (27) eine als eigenständiges Gestell innerhalb der Einhausung (30) ausgebildete zweite Plattform (28) aufgestellt ist, welche eine zweite Öffnung (34) für die Silobrennkammer (23) aufweist.

14. Einhausung nach Anspruch 13, **dadurch gekennzeichnet, dass** die zweite Plattform (28) zur schnelleren Montage und Demontage in zwei Teile (28a,b) aufgeteilt ist.

15. Einhausung nach Anspruch 13 oder 14, **dadurch gekennzeichnet, dass** an der zweiten Plattform (28) zur Erhöhung der Sicherheit bei der Montage und Demontage ein Schutzgeländer (31) montiert ist.

16. Einhausung nach einem der Ansprüche 13 bis 15, **dadurch gekennzeichnet, dass** die zweite Plattform (28) als Träger elektrischer Installationen dient.

17. Einhausung nach Anspruch 1, **dadurch gekennzeichnet, dass** die Deckenpaneele (26) der Haube ein Dach bilden, und dass in dem Dach wenigstens eine Öffnung (45, 46) vorgesehen ist, welche Zugang zum Inneren der Einhausung (30) gewährt.

18. Einhausung nach Anspruch 1, **dadurch gekennzeichnet, dass** für die Entlüftung der Einhausung (30) eine Ventilationseinrichtung (47) vorgesehen ist, dass die Ventilationseinrichtung (47) getrennt von der Einhausung (30) angeordnet und mit der Einhausung (30) über einen Abluftkanal (19) verbunden ist.

19. Einhausung nach Anspruch 18, **dadurch gekennzeichnet, dass** der Abluftkanal (19) zur schnelleren Montage und Demontage mit Schnellverschlüssen ausgestattet ist.

## Claims

1. Housing (30) for a silo combustion chamber (23) disposed perpendicularly on a gas turbine (22), which housing (30) comprises a plurality of wall and ceiling panels (25, 26) which form a hood and enclose the silo combustion chamber (23), **characterized in that** the wall and ceiling panels (25, 26) form a self-supporting hood by being rigidly connected to one another.

2. Housing according to Claim 1, **characterized in that** the wall and ceiling panels (25, 26) each have an integrated steel construction (37, 38).

3. Housing according to Claim 2, **characterized in that** the integrated steel construction (37, 38) comprises a frame for the respective panel (25, 26).

4. Housing according to one of Claims 1 to 3, **characterized in that** the wall and ceiling panels (25, 26) are each of rectangular design.

5. Housing according to one of Claims 1 to 4, **characterized in that** the rigid connection between the ceiling and/or wall panels (25, 26) is designed to be releasable.

6. Housing according to Claim 5, **characterized in that** quick-release locks (35) are provided for the releasable connection between the ceiling and/or wall panels (25, 26).

7. Housing according to Claim 6, **characterized in that** the wall and ceiling panels (25, 26) each have an integrated steel construction (37, 38) which comprises a frame for the respective panel (25, 26), and **in that** the quick-release locks (35) are arranged on the frames of the panels (25, 26).

8. Housing according to Claim 6, **characterized in that** the quick-release locks (35) each comprise a clamping hook (41), which can be actuated by means of a pivotably mounted clamping lever (40), on the frame of the one panel and a pin (39) on the frame of the other panel, the clamping hook (41) engaging behind said pin (39) during the clamping of the connection.

9. Housing according to Claim 7 or 8, **characterized in that** a U profile (42) running in the longitudinal direction is arranged for connecting two panels (25, 26) within the frame of the one panel, which U profile (42) accommodates a rectangular profile (43) arranged on the frame of the other panel, running in the longitudinal direction and adapted in width.

10. Housing according to one of Claims 7 to 9, **characterized in that** braces (36) extending diagonally for the support are arranged between panels (25a, b) connected to one another at right angles.

11. Housing according to Claim 1, **characterized in that** means for lifting the panels (25, 26) or the hood, in particular in the form of eyelet bolts (44), are provided on the panels (25, 26) or the hood.

12. Housing according to Claim 1, **characterized in that** the housing (30) sits on a first platform (27) which is arranged on posts (11) above the gas turbine (22) and has a first opening (33) for the silo combustion chamber (23).

13. Housing according to Claim 12, **characterized in that** a second platform (28) designed as an independent stand inside the housing (30) is set up inside the hood on the first platform (27), said second platform (28) having a second opening (34) for the silo combustion chamber (23).

14. Housing according to Claim 13, **characterized in that** the second platform (28) is split into two parts (28a, b) for quicker fitting and removal.

15. Housing according to Claim 13 or 14, **characterized in that** a guard rail (31) is fitted on the second platform (28) for increasing the safety during assembly and dismantling.

16. Housing according to one of Claims 13 to 15, **characterized in that** the second platform (28) serves as a support for electrical installations.

17. Housing according to Claim 1, **characterized in that** the ceiling panels (26) of the hood form a roof, and **in that** at least one opening (45, 46) which allows access to the interior of the housing (30) is provided in the roof.

18. Housing according to Claim 1, **characterized in that** a ventilation device (47) is provided for the venting of the housing (30), **in that** the ventilation device (47) is arranged separately from the housing (30) and is connected to the housing (30) via an exhaust air duct (19).

19. Housing according to Claim 18, **characterized in that** the exhaust air duct (19) is equipped with quick-locking mechanisms for quicker fitting and removal.

## Revendications

1. Enceinte (30) pour une chambre de combustion de type silo (23) disposée verticalement sur une turbine à gaz (22), laquelle enceinte (30) comprend une pluralité de panneaux de paroi et de couvercle (25, 26) qui forment une hotte et entourent la chambre de combustion de type silo (23), **caractérisée en ce que** les panneaux de paroi et de couvercle (25, 26) forment une hotte autoportante par un assemblage rigide entre eux.

2. Enceinte selon la revendication 1, **caractérisée en ce que** les panneaux de paroi et de couvercle (25, 26) présentent chacun une construction en acier intégrée (37, 38).

3. Enceinte selon la revendication 2, **caractérisée en ce que** la construction en acier intégrée (37, 38) comprend un cadre pour le panneau respectif (25, 26).

4. Enceinte selon l'une quelconque des revendications 1 à 3, **caractérisée en ce que** les panneaux de paroi et de couvercle (25, 26) sont à chaque fois réalisés sous forme rectangulaire.

5. Enceinte selon l'une quelconque des revendications 1 à 4, **caractérisée en ce que** l'assemblage rigide entre les panneaux de paroi et/ou de couvercle (25, 26) est réalisé de manière desserrable.

6. Enceinte selon la revendication 5, **caractérisée en ce que** pour l'assemblage desserrable entre les panneaux de paroi et/ou de couvercle (25, 26), on prévoit des fermetures à blocage rapide (35).

7. Enceinte selon la revendication 6, **caractérisée en ce que** les panneaux de paroi et de couvercle (25, 26) présentent à chaque fois une construction en acier intégrée (37, 38), qui comprend un cadre pour chaque panneau (25, 26), et **en ce que** les fermetures à blocage rapide (35) sont disposées sur le cadre des panneaux (25, 26).

8. Enceinte selon la revendication 6, **caractérisée en ce que** les fermetures à blocage rapide (35) comprennent à chaque fois un crochet de serrage (41) pouvant être commandé au moyen d'un levier de serrage (40) monté de manière pivotante, sur le cadre de l'un des panneaux et un boulon (39) sur le cadre de l'autre panneau, lequel boulon (39) vient en prise par l'arrière avec le crochet de serrage (41) lors du serrage de l'assemblage.

9. Enceinte selon la revendication 7 ou 8, **caractérisée en ce que** pour la connexion de deux panneaux (25, 26) à l'intérieur du cadre de l'un des panneaux, on dispose un profilé en U (42) s'étendant dans la direction longitudinale, lequel reçoit un profilé à quatre pans (43) disposé sur le cadre de l'autre panneau, s'étendant dans la direction longitudinale et adapté en largeur.

10. Enceinte selon l'une quelconque des revendications 7 à 9, **caractérisée en ce que** l'on dispose des renforts (36) s'étendant sur chant pour le support entre des panneaux (25a, b) connectés à angle droit les uns aux autres.

11. Enceinte selon la revendication 1, **caractérisée en ce que** sur les panneaux (25, 26) ou la hotte sont prévus des moyens pour soulever les panneaux (25, 26) ou la hotte, notamment sous forme d'oeillets de vis (44).

12. Enceinte selon la revendication 1, **caractérisée en ce que** l'enceinte (30) repose sur une première plate-forme (27) qui est disposée sur des supports (11) au-dessus de la turbine à gaz (22) et qui présente une première ouverture (33) pour la chambre de combustion de type silo (23).

13. Enceinte selon la revendication 12, **caractérisée en ce qu'**à l'intérieur de la hotte sur la première plate-forme (27) est posée une deuxième plate-forme (28) réalisée sous forme de bâti autonome à l'intérieur de l'enceinte (30), laquelle présente une deuxième ouverture (34) pour la chambre de combustion de type silo (23).

14. Enceinte selon la revendication 13, **caractérisée en ce que** la deuxième plate-forme (28) est divisée en deux parties (28a, b) pour permettre un montage et un démontage plus rapides.

15. Enceinte selon la revendication 13 ou 14, **caractérisée en ce que** l'on monte sur la deuxième plate-forme (28), pour augmenter la sécurité lors du montage et du démontage, un palier de protection (31).

16. Enceinte selon l'une quelconque des revendications 13 à 15, **caractérisée en ce que** la deuxième plate-forme (28) sert de support d'installations électriques.

17. Enceinte selon la revendication 1, **caractérisée en ce que** les panneaux de couvercle (26) de la hotte forment un toit et **en ce qu'**au moins une ouverture (45, 46) est prévue dans le toit pour assurer l'accès à l'intérieur de l'enceinte (30).

18. Enceinte selon la revendication 1, **caractérisée en ce que** pour le désaérage de l'enceinte (30), on prévoit un dispositif de ventilation (47), **en ce que** le dispositif de ventilation (47) est disposé de manière séparée de l'enceinte (30) et est connecté à l'enceinte (30) par le biais d'un canal d'évacuation d'air (19).

19. Enceinte selon la revendication 18, **caractérisé en ce que** le canal d'évacuation d'air (19) est équipé de fermetures rapides pour un montage et un démontage plus rapides.
